# EUROPEAN PATENT APPLICATION

(11) **EP 4 693 049 A1**
(43) Date of publication of application: **11.02.2026**
(21) Application number: 24867132.3
(22) Date of filing: 06.08.2024
(51) Int. Cl.: G06F 9/54, G06F 9/50

(54) **METHOD FOR MANAGING SYSTEM SERVICES, AND RELATED APPARATUS**

(30) Priority: 19.09.2023 CN 202311224555
(71) Applicant: Huawei Technologies Co., Ltd., Shenzhen, Guangdong 518129 (CN)
(72) Inventor: LI, Jiarun, Shenzhen, Guangdong 518129 (CN)
(74) Representative: Thun, Clemens
(86) International application number: PCT/CN2024/110082
(87) International publication number: WO 2025/060715

(57) **Abstract**

This application provides a system service management method and a related apparatus. The method includes: obtaining a called status of a first system service, where the first system service is a system service other than a preset basic system service; obtaining an occurrence status of one or more events related to the first system service, where the one or more events are configured in a configuration file corresponding to the first system service; obtaining a status of silent running of the first system service; and determining a status of the first system service based on the called status, the occurrence status of the one or more events, and the status of the silent running, where the status includes a working state or an idle state. In this way, it can be determined that each system service is in the working state or the idle state.

## Description

This application claims priority to Chinese Patent Application No. 202311224555.X, filed with the China National Intellectual Property Administration on September 19, 2023, and entitled "SYSTEM SERVICE MANAGEMENT METHOD AND RELATED APPARATUS", which is incorporated herein by reference in its entirety.

### TECHNICAL FIELD

This application relates to the field of terminal technologies, and in particular, to a system service management method and a related apparatus

### BACKGROUND

System services (system services) refer to programs, routines, or processes that execute specified system functions, to support other programs, especially low-level (hardware-near) programs. To be specific, the system services are to encapsulate basic system capabilities oriented to applications, such as application process management, component management, window management, installation package management, phone management, network management, and distributed communication, to provide application programming interfaces (application programming interfaces, APIs) for the applications.

As long as a terminal device with a current operating system is powered on, regardless of whether a system service in the operating system of the terminal device is in a working state, each system service may occupy a specific system resource, causing a waste of resources. However, currently, a status of each system service cannot be accurately determined, and consequently, a system resource corresponding to each system service cannot be managed based on the status of the system service. Therefore, how to accurately determine the status of each system service becomes a technical problem that urgently needs to be resolved.

### SUMMARY

This application provides a system service management method and a related apparatus, to accurately determine a status of each system service.

According to a first aspect, this application provides a system service management method. The method may be performed by a terminal device, or the method may be performed by a component (for example, a chip or a chip system) configured in the terminal device, or may be implemented by a logical module or software that can implement all or some functions of the terminal device. This is not limited in this application.

For example, the method includes: obtaining a called status of a first system service, where the first system service is a system service other than a preset basic system service; obtaining an occurrence status of one or more events related to the first system service, where the one or more events are configured in a configuration file corresponding to the first system service; obtaining a status of silent running of the first system service; and determining a status of the first system service based on the called status, the occurrence status of the one or more events, and the status of the silent running, where the status includes a working state or an idle state.

Based on the foregoing solution, a called status of a non-basic system service, an occurrence status of an event related to the non-basic system service, and a status of silent running of the non-basic system service are obtained, to determine, based on the foregoing three items, that a status of the non-basic system service is, for example, the working state or the idle state, so as to accurately determine a status of each system service.

With reference to the first aspect, in some possible implementations, the status of the silent running includes silent running or non-silent running.

With reference to the first aspect, in some possible implementations, when the first system service has declared starting of the silent running, but has not declared ending of the silent running, the status of the silent running is silent running; or when the first system service has declared ending of the silent running or never declares starting of the silent running, the status of the silent running is non-silent running.

With reference to the first aspect, in some possible implementations, whether occurrence of any one of the one or more events triggers running of the first system service or triggers ending of running of the first system service is also configured in the configuration file corresponding to the first system service.

With reference to the first aspect, in some possible implementations, determining the status of the first system service based on the called status, the occurrence status of the one or more events, and the status of the silent running includes: when the first system service is called, or when occurrence of any one of the one or more events triggers running of the first system service, or when the status of the silent running is silent running, determining that the status of the first system service is the working state.

In other words, the terminal device may determine, based on any one of the called status, the occurrence status of the one or more events, or the status of the silent running of the first system service, whether the status of the first system service is the working state.

With reference to the first aspect, in some possible implementations, determining the status of the first system service based on one or more of the called status of the first system service, the occurrence status of the one or more events, and the status of the silent running includes: when the first system service is not called, occurrence of any one of the one or more events triggers ending of running of the first system service or no event in the one or more events occurs, and the status of the silent running is non-silent running, determining that the status of the first system service is the idle state.

In other words, the terminal device may determine, with reference to the three items: the called status of the first system service, the occurrence status of the one or more events, and the status of the silent running of the first system service, whether the status of the first system service is the idle state.

With reference to the first aspect, in some possible implementations, obtaining the called status of the first system service includes: obtaining a called count of the first system service; and when the called count is zero, determining that the called status is non-called; or when the called count is greater than zero, determining that the called status is called.

With reference to the first aspect, in some possible implementations, obtaining the occurrence status of the one or more events related to the first system service includes: detecting the one or more events related to the first system service.

With reference to the first aspect, in some possible implementations, the method further includes: updating a status identifier based on a most recently determined status of the first system service, where the status identifier is used to record the status of the first system service.

The terminal device may utilize the status identifier to record a status of each system service, and modify the status of each system service.

With reference to the first aspect, in some possible implementations, updating the status identifier based on the most recently determined status of the first system service includes: when the status identifier is empty or the recorded status of the first system service is the working state, updating the status identifier to the idle state when it is most recently determined that the called status is non-called, no event in one or more events occurs or occurrence of any one of the one or more events triggers ending of running of the first system service, and the status of the silent running is non-silent running.

With reference to the first aspect, in some possible implementations, updating the status identifier based on the most recently determined status of the first system service includes: when the status identifier is empty or the recorded status of the first system service is the idle state, updating the status identifier to the working state when it is most recently determined that the called status is called, or when occurrence of any one of the one or more events triggers running of the first system service, or when the status of the silent running is silent running.

With reference to the first aspect, in some possible implementations, the method further includes: when the status of the first system service is the idle state, releasing a system resource occupied by the first system service.

On a premise of learning the status of each system service, the terminal device may manage, based on the status of the system service, a system resource corresponding to the system service. For example, when the first system service is in the idle state, the terminal device may release the system resource corresponding to the first system service, to avoid a waste of the system resource, so that another system service or application process can utilize the system resource.

According to a second aspect, this application provides a terminal device. The terminal device may be configured to implement the method according to the first aspect or any possible implementation of the first aspect. The terminal device includes corresponding modules configured to perform the foregoing method. The modules included in the terminal device may be implemented in a software and/or hardware manner.

According to a third aspect, this application provides a terminal device. The terminal device includes at least one processor and at least one communication interface. The processor is coupled to the communication interface, and may be configured to execute a program, to implement the system service management method according to the first aspect and any possible implementation of the first aspect.

Optionally, the terminal device further includes a memory, and the processor is coupled to the memory.

According to a fourth aspect, this application provides a chip system. The chip system includes at least one processor, configured to support implementation of a function according to the first aspect and any possible implementation of the first aspect, for example, processing data in the foregoing method.

In a possible design, the chip system further includes a memory. The memory is configured to store program instructions and data. The memory is located inside the processor or outside the processor.

The chip system may include a chip, or may include a chip and another discrete component.

According to a fifth aspect, a readable storage medium is provided. The storage medium stores a program (which may also be referred to as code or instructions), and when the program is run, the method according to the first aspect and any possible implementation of the first aspect is performed.

According to a sixth aspect, a program product is provided. The program product includes a program (which may also be referred to as code or instructions), and when the program is run, the method according to the first aspect and any possible implementation of the first aspect is performed.

It should be understood that the second aspect to the sixth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a diagram of a structure of a terminal device applicable to a system service management method according to an embodiment of this application;
FIG. 2 is a block diagram of a structure of software of a terminal device applicable to a system service management method according to an embodiment of this application;
FIG. 3 is a block diagram of another structure of software of a terminal device applicable to a system service management method according to an embodiment of this application;
FIG. 4 is a schematic flowchart of a system service management method according to an embodiment of this application;
FIG. 5 is a diagram of a plurality of triggering manners for changing a status of a system service according to an embodiment of this application;
FIG. 6 is a diagram of calling a system service by an application process according to an embodiment of this application;
FIG. 7 is a diagram of obtaining a called count of a first system service according to an embodiment of this application;
FIG. 8 is a diagram of detecting a system event according to an embodiment of this application; and
FIG. 9 is a diagram of declaring, by a system service, starting of silent running and declaring ending of the silent running according to an embodiment of this application.

### DESCRIPTION OF EMBODIMENTS

The following describes technical solutions of this application with reference to accompanying drawings.

First, in embodiments of this application, the terms "include", "having", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

Second, in embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context.

Third, in this application, "when", "in a case in which", "if", and "it is assumed that" all mean that an apparatus performs corresponding processing in an objective case, are not intended to limit time, do not require the apparatus to necessarily have a determining action during implementation, and do not mean that there is another limitation.

System services refer to programs, routines, or processes that execute specified system functions, to support other programs, especially low-level (hardware-near) programs. To be specific, the system services encapsulate basic system capabilities oriented to applications, such as application process management, component management, window management, installation package management, phone management, network management, and distributed communication, to provide APIs for the applications. An operating system of a terminal device includes many system services. Some system services are system services that need to be always in a running state when the terminal device is in a normal running state, for example, including but not limited to some system services related to power management, some system services related to screen display, or some system services related to application processes, where these system services may be referred to as basic system services. In addition, some system services do not need to be always in the running state when the terminal device is in the normal running state, for example, include but are not limited to a Bluetooth service, a phone service, or an upgrade service, where these system services may be referred to as non-basic system services.

As long as the terminal device with a current operating system is powered on, regardless of whether a system service in the operating system of the terminal device is in a working state, each system service may occupy a specific system resource, causing a waste of resources. However, currently, a status of each system service cannot be accurately determined, and consequently, a system resource corresponding to each system service cannot be managed based on the status of the system service. Therefore, how to accurately determine a status of each system service becomes a technical problem that urgently needs to be resolved.

To resolve the foregoing problem, this application provides a system service management method and a related apparatus. A called status of a non-basic system service, an occurrence status of an event related to the non-basic system service, and a status of silent running of the non-basic system service are obtained, to determine that a status of the non-basic system service is, for example, a working state or an idle state, so as to accurately determine a status of each system service.

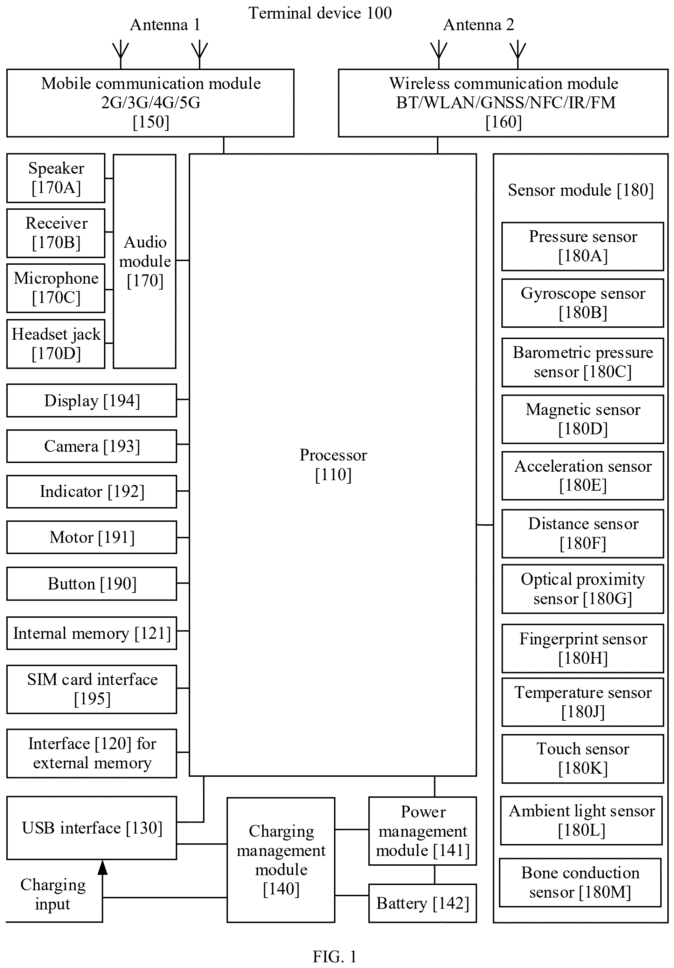

Before a system service management method provided in embodiments of this application is described in detail below, a terminal device applicable to embodiments of this application is first described as an example with reference to FIG. 1, FIG. 2, and FIG. 3.

The system service management method provided in embodiments of this application may be applied to a device like a mobile phone, a tablet computer, a smart television, a smart screen, a smartwatch, a wearable device, an in-vehicle device, a notebook computer, a personal computer (personal computer, PC), an ultra-mobile personal computer (ultra-mobile personal computer, UMPC), a netbook, a personal digital assistant (personal digital assistant, PDA), or a distributed device. A specific type of the device is not limited in embodiments of this application. The device may also be referred to as user equipment (user equipment, UE), a mobile device, a user terminal, a wireless communication device, a user apparatus, or the like. This is not limited in embodiments of this application either.

In addition, the method in embodiments of this application may support operating systems such as an Android operating system (Android operating system, Android OS), a Harmony operating system (Harmony OS), an open Harmony operating system (OpenHarmony OS), iOS, a windows operating system (Windows OS), and a lightweight operating system (like LiteOS). This is not limited in embodiments of this application.

FIG. 1 is a diagram of a structure of a terminal device applicable to a system service management method according to an embodiment of this application.

For example, FIG. 1 is a diagram of a structure of a terminal device 100. As shown in FIG. 1, the terminal device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent components, or may be integrated into one or more processors.

The application processor outputs a sound signal via the audio module 170 (for example, the loudspeaker 170A), or displays an image or a video on the display 194.

The controller may be a nerve center and a command center of the terminal device 100. The controller may generate an operation control signal based on instruction operation code and a time sequence signal, to complete control of instruction reading and instruction execution.

A memory may also be disposed in the processor 110, and is configured to store instructions and data. In some embodiments, the memory in the processor 110 is a cache. The memory may store instructions or data that has been used or is cyclically used by the processor 110. If the processor 110 needs to use the instruction or the data again, the processor may directly call the instruction or the data from the memory. This avoids repeated access, reduces a waiting time of the processor 110, and improves system efficiency.

The processor 110 may perform different operations by executing the instruction, to implement different functions. For example, the instruction may be an instruction pre-stored in the memory before the device is delivered from a factory, or may be an instruction read from a new APP after a user installs the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be used to connect to the charger to charge the terminal device 100, or may be used to transmit data between the terminal device 100 and a peripheral device, or may be configured to connect to a headset for playing an audio through the headset. The interface may be configured to connect to another device, for example, an augmented reality (augmented reality, AR) device. It may be understood that an interface connection relationship between the modules shown in this application is merely an example for description, and does not constitute a limitation on the structure of the terminal device 100. In some other embodiments, the terminal device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. While charging the battery 142, the charging management module 140 may further supply power to the terminal device 100 through the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the terminal device 100 may be configured to cover one or more communication frequency bands. Different antennas may be further reused, to improve antenna utilization.

The mobile communication module 150 may provide a solution applied to the terminal device 100 for wireless communication including 2G/3G/4G/5G and the like.

The wireless communication module 160 may provide a solution applied to the terminal device 100 for wireless communication including a wireless local area network (wireless local area network, WLAN) (like a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology.

The terminal device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194, which may also be referred to as a screen, may be configured to display an image, a video, and the like. It should be understood that the display 194 may further include more components, for example, a backlight board or a drive circuit. The backlight board may be configured to provide a light source, and a display panel emits light based on the light source provided by the backlight board. The drive circuit may be configured to control a liquid crystal of a liquid crystal layer to transmit light or not to transmit light.

The terminal device 100 may implement an image shooting function by using the ISP, the camera 193, the video codec, the GPU, the display 194, the application processor, and the like.

The interface 120 for external memory may be configured to connect to an external storage card, for example, a micro SD card, to extend a storage capability of the terminal device 100. The external storage card communicates with the processor 110 through the interface 120 for external memory, to implement a data storage function. For example, files such as music and videos are stored in the external storage card.

The internal memory 121 may be configured to store device-executable program code. The executable program code includes instructions. The processor 110 runs the instructions stored in the internal memory 121, to perform various function applications and data processing of the terminal device 100. The internal memory 121 may include a program storage region and a data storage region. The program storage region may store an operating system, an application required by at least one function (for example, a sound playing function or an image playing function), and the like. The data storage region may store data (for example, audio data and contacts) and the like created during use of the terminal device 100. In addition, the internal memory 121 may include a high-speed random access memory, or may include a nonvolatile memory, for example, at least one magnetic disk storage device, a flash memory device, or a universal flash storage.

The terminal device 100 may implement an audio function, for example, music playing or recording through the audio module 170, the speaker 170A, the receiver 170B, the microphone 170C, the headset jack 170D, the application processor, and the like.

It may be understood that the structure shown in this application does not constitute a specific limitation on the terminal device 100. In some other embodiments, the terminal device 100 may include more or fewer components than those shown in the figure, or a combination of a part of the components, or splits from a part of the components, or an arrangement of different components. The components shown in the figure may be implemented by hardware, software, or a combination of software and hardware.

A software system of the terminal device 100 may use a layered architecture, an event-driven architecture, a microkernel architecture, a microservice architecture, or a cloud architecture. The layered architecture divides the software system of the terminal device 100 into several layers, each layer has a clear role and division of labor, and the layers communicate with each other through a software interface. In this application, an operating system like OpenHarmony OS and Android in a layered architecture is used as an example to describe an example of a software structure of the terminal device 100, but a type of an operating system of the terminal device used in the system service management method provided in embodiments of this application should not be limited.

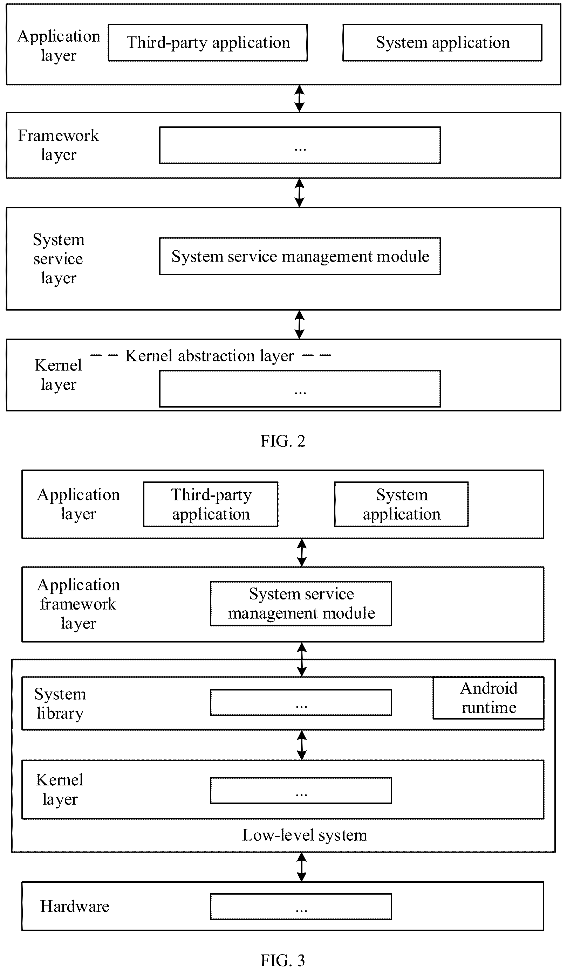

FIG. 2 is a block diagram of a structure of software of a terminal device applicable to a system service management method according to an embodiment of this application.

As shown in FIG. 2, in some embodiments, the operating system is divided into four layers, which are respectively an application layer, a framework layer, a system service layer, and a kernel layer from top to bottom. In some embodiments, the terminal device 100 further includes hardware such as a GPU, a central processing unit (central processing unit, CPU), and a display.

The application layer may include a series of applications. As shown in FIG. 2, the application layer may include a system application and a third-party application. The system application may be understood as some built-in applications of the system, for example, applications such as Camera, Gallery, Calendar, Phone, Maps, Bluetooth, Videos, and Music. The third-party application may be understood as a non-system application, and may be an application downloaded and installed from an application store, an application market, or the like.

Not shown in FIG. 2, the framework layer may include a user interface (user interface, UI) framework, a user program framework, and a component framework. The framework layer provides the user program framework and component framework with multi languages such as C, C++, and JavaScript (JS) for an application on the operating system, and a multi-language framework API open to various software and hardware services; and provides a UI framework with multi languages such as C, C++, and JS for a device. APIs supported by different devices are related to a degree of componentization of the system.

The system service layer is a core capability set of the operating system, and provides various system services for an application via the framework layer. In this embodiment of this application, the system service layer may further include a system service management module. The system service management module may be configured to: obtain a called status of a non-basic system service, an occurrence status of an event related to the non-basic system service, and a status of silent running of the non-basic system service, and determine a status of the non-basic system service based on one or more of the foregoing three items. For detailed descriptions of the system service management module, refer to related descriptions below. For brevity, details are not described herein again.

As not shown in FIG. 2, the system service layer may include a system basic capability subsystem set, a basic software service subsystem set, an enhanced software service subsystem set, and a hardware service subsystem set.

The system basic capability subsystem set may include subsystems such as a distributed soft bus subsystem and a distributed data management subsystem. The system basic capability subsystem set may provide a basic capability for operations such as running, scheduling, and migration of a distributed application on a plurality of devices.

The basic software service subsystem set may include subsystems such as an event notification, phone, and multimedia, and provides a common and universal software service.

The enhanced software service subsystem set may include subsystems such as a dedicated service of a smart screen, a dedicated service of wearables, and a dedicated service of the internet of things (internet of things, IoT), and may provide differentiated capability enhanced software services for different devices.

The hardware service subsystem set may include subsystems such as a location service, biometric feature recognition, a wearable dedicated hardware service, and an IoT dedicated hardware service, and may provide a hardware service.

It should be noted that, based on deployment environments of different device forms, the basic software service subsystem set, the enhanced software service subsystem set, and the hardware service subsystem set may be tailored at a subsystem granularity, and each subsystem may be tailored at a function granularity. This is not limited in embodiments of this application.

As not shown in FIG. 2, the kernel layer may include a kernel subsystem and a drive subsystem. The operating system may adopt a multi-kernel design. Based on the kernel subsystem, the operating system supports selection of an appropriate OS kernel for different resource-limited devices. A kernel abstraction layer (kernel abstraction layer, KAL) shields differences between a plurality of kernels and provides a basic kernel capability for an upper layer, where the basic kernel capability includes process/thread management, memory management, file system management, network management, peripheral management, and the like. A drive framework in the drive subsystem is a basis of an open hardware ecosystem of the operating system, and may provide a unified peripheral access capability and a driver development and management framework.

FIG. 3 is a block diagram of another structure of software of a terminal device applicable to a system service management method according to an embodiment of this application.

As shown in FIG. 3, in some embodiments, an Android operating system is divided into an application layer, an application framework layer, Android runtime (Android runtime) and a system library, and a kernel layer from top to bottom.

In some embodiments, the terminal device 100 further includes hardware such as a GPU, a CPU, and a display.

The application layer may include a series of applications. As shown in FIG. 3, the application layer may include a system application and a third-party application. The system application may be understood as some built-in applications of the system, for example, applications such as Camera, Gallery, Calendar, Phone, Maps, Bluetooth, Videos, and Music. The third-party application may be understood as a non-system application, and may be an application downloaded and installed from an application store or the like.

The application framework layer provides an API and a programming framework for an application at the application layer. The application framework layer includes some predefined functions. As shown in FIG. 3, the application framework layer may include the system service management module and the like. For detailed descriptions of the system service management module, refer to related content in FIG. 2. For brevity, details are not described herein again.

As not shown in FIG. 3, the Android runtime may include a core library and a virtual machine. The Android runtime is responsible for scheduling and management of the Android operating system.

The core library may include two parts: a function that needs to be called in a Java language, and a core library of the Android operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

As not shown in FIG. 3, the system library may include a plurality of functional modules, for example, a status monitoring service, a surface manager (surface manager), a media library (media library), a three-dimensional graphics processing library (for example, OpenGL ES), and a two-dimensional (2 dimensions, 2D) graphics engine (for example, SGL).

The kernel layer is a layer between hardware and software. As not shown in FIG. 3, the kernel layer may include a power management service, a sensor service (which may also be referred to as a sensor driver), a display service (which may also be referred to as a display driver), a camera driver, an audio driver, and the like. This is not limited in embodiments of this application.

In this embodiment of this application, as shown in FIG. 2 or FIG. 3, the terminal device may include the system service management module, so that the terminal device has a capability of implementing the system service management method provided in this application.

It should be understood that FIG. 1, FIG. 2, and FIG. 3 are merely examples, and should not impose any limitation on embodiments of this application.

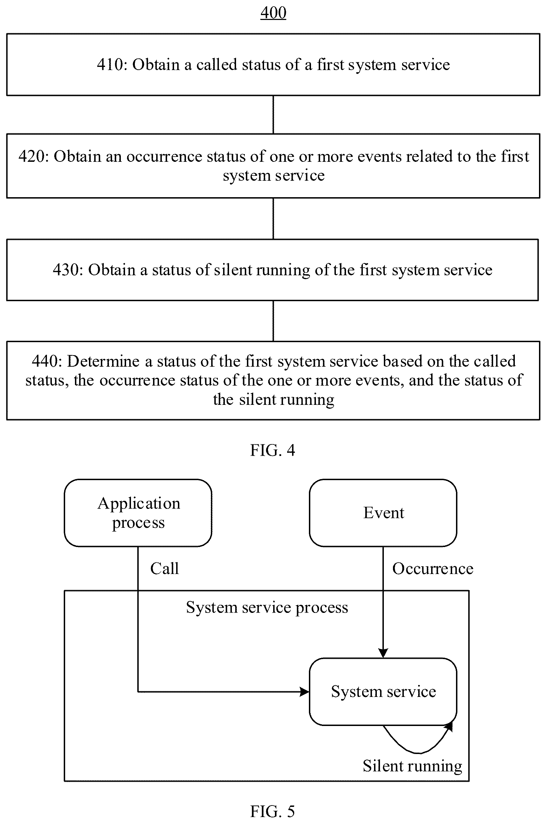

FIG. 4 is a schematic flowchart of a system service management method according to an embodiment of this application.

As shown in FIG. 4, a method 400 may include step 410 to step 440. The steps of the method 400 may be performed by a terminal device, or the method 400 may be performed by a component (for example, a chip or a chip system) configured in the terminal device, or may be implemented by a logical module or software that can implement all or some functions of the terminal device. This is not limited in embodiments of this application. The terminal device may have the structure shown in FIG. 1, FIG. 2, or FIG. 3. This is not limited in embodiments of this application. The following describes the steps in FIG. 4 in detail.

Step 410: Obtain a called status of a first system service.

It may be understood that the first system service is any system service in non-basic system services. The non-basic system service is a system service other than a preset basic system service. For related descriptions of the basic system service and the non-basic system service, refer to the foregoing related content. For brevity, details are not described herein again.

Step 420: Obtain an occurrence status of one or more events related to the first system service.

The one or more events are configured in a configuration file corresponding to the first system service. Whether occurrence of any one of the one or more events triggers running of the first system service or triggers ending of running of the first system service is also configured in the configuration file corresponding to the first system service.

Step 430: Obtain a status of silent running.

The status of the silent running includes silent running or non-silent running.

In this embodiment of this application, the system service may actively declare starting of the silent running, or may actively declare ending of the silent running. When the first system service has declared starting of the silent running, but has not declared ending of the silent running, the status of the silent running is silent running; or when the first system service has declared ending of the silent running or never declares starting of the silent running, the status of the silent running is non-silent running.

The terminal device may separately obtain, by utilizing the system service management module shown in FIG. 2 or FIG. 3, the called status of the first system service, the occurrence status of the one or more events related to the first system service, and the status of the silent running of the first system service. In other words, the system service management module provided in this application may have a capability of obtaining the called status of the first system service, a capability of obtaining the occurrence status of the one or more events related to the first system service, and a capability of obtaining the status of the silent running of the first system service.

FIG. 5 is a diagram of a plurality of triggering manners for changing a status of a system service according to an embodiment of this application.

As shown in FIG. 5, in the system service management method provided in embodiments of this application, the plurality of triggering manners that can change the status of the system service are comprehensively considered.

First triggering manner: An application process (including a process of a system application and a process of a third-party application) calls a system service.

One application process may call one or more system services, and one system service may also be called by one or more application processes. When the application process calls the first system service, the first system service may run, that is, the first system service may enter a working state. For example, some application processes may call a camera service, to implement a function (including but not limited to a photo shooting function or a video shooting function) related to the camera service.

Second triggering manner: Occurrence of an event related to a system service.

One system service may correspond to one or more related events. The one or more events related to the first system service are pre-configured, and that occurrence of any one of the one or more events triggers running or ending of running of the first system service is also pre-configured. By way of example, and not limitation, each system service may correspond to one configuration file, and one or more events related to the system service are configured in the configuration file, and whether occurrence of any one of these events triggers running of the system service or triggers ending of running of the system service is configured. For example, a network connection event and a network disconnection event are related to a network service. When the network connection event occurs, running of the network service may be triggered; and when the network disconnection event is triggered, ending of running of the network service may be triggered.

Third triggering manner: A system service may actively declare starting of silent running, or may actively declare ending of silent running.

In the system service management method provided in this embodiment of this application, an interface used to declare starting of the silent running and ending of the silent running is provided for the system service. When the system service needs to perform silent running, the system service may actively declare starting of the silent running through the interface, so that the system service can enter the working state. When the system service expects to end the silent running, the system service may actively declare ending of the silent running through the interface, so that the system service can end the silent running. For example, when an upgrade service needs to perform silent running, the upgrade service may actively declare starting of the silent running through the interface. After upgrade ends, the system service may actively declare ending of the silent running through the interface.

Therefore, in consideration of the three triggering manners, the terminal device may perform any one of step 410 to step 430 by utilizing the system service management module.

For example, the terminal device may perform step 410 by utilizing the system service management module. To be specific, the terminal device may obtain the called status of the first system service by utilizing the system service management module, and then may determine, based on the called status of the first system service, whether the first system service is in the working state. When the first system service is called by at least one application process, it may be determined that the status of the first system service is the working state. When no application process calls the first system service, the first system service may not enter an idle state, and whether the first system service is in the idle state may be further determined in combination with another aspect.

For another example, the terminal device may perform step 420 by utilizing the system service management module. To be specific, the terminal device may obtain, by utilizing the system service management module, the occurrence status of the one or more events related to the first system service. In other words, when an event occurs, the terminal device may determine, based on the configuration file corresponding to the first system service, whether the event is related to the first system service. When the event is related to the first system service, it is determined, based on the configuration file, whether occurrence of the event triggers running of the first system service or triggers ending of running of the first system service. When it is determined that occurrence of the event triggers running of the first system service, it may be determined that the status of the first system service is the working state. When it is determined that occurrence of the event triggers ending of running of the first system service, the first system service may not enter the idle state, and whether the first system service enters the idle state may be further determined in combination with another aspect.

For another example, the terminal device may perform step 430 by utilizing the system service management module. To be specific, the terminal device may obtain the status of the silent running of the first system service by utilizing the system service management module. In other words, when the first system service needs to perform silent running, the first system service may actively declare, to the system service management module, starting of the silent running, so that the system service management module knows that the first system service enters the working state. When the first system service expects to end the silent running, the first system service may actively declare, to the system service management module, ending of the silent running, so that the first system service can end the silent running. However, the first system service may not necessarily enter the idle state, and whether the first system service is in the idle state may be further determined in combination with another aspect. In other words, when the first system service has declared starting of the silent running, but has not declared ending of the silent running, the status of the silent running is silent running; or when the first system service has declared ending of the silent running or never declares starting of the silent running, the status of the silent running is non-silent running. When the status of the silent running is non-silent running, the first system service may not necessarily enter the idle state, and whether the first system service is in the idle state may be further determined in combination with another aspect.

It may be understood that a sequence of performing step 410, step 420, and step 430 is not limited in this application. In other words, step 410, step 420, and step 430 may be performed simultaneously, or may not be performed simultaneously. This is not limited in this application.

Step 440: Determine the status of the first system service based on the called status, the occurrence status of the one or more events, and the status of the silent running.

The status of the first system service includes the working state or the idle state. That the first system service is in the working state may be understood as that the first system service is running. That the first system service is in the idle state may be understood as that the first system service is not running.

The terminal device may determine the status of the first system service based on the called status of the first system service, the occurrence status of the one or more events, and the status of the silent running of the first system service by utilizing the system service management module.

In a possible implementation, determining the status of the first system service based on the called status, the occurrence status of the one or more events, and the status of the silent running includes: when the first system service is called, or when occurrence of any one of the one or more events triggers running of the first system service, or when the status of the silent running is silent running, determining that the status of the first system service is the working state.

When the called status is called, that is, when the first system service is called by at least one application process, the terminal device may determine that the status of the first system service is the working state.

When occurrence of any one of the one or more events related to the first system service triggers running of the first system service, the terminal device may determine that the status of the first system service is the working state.

When the status of the silent running of the first system service is silent running, that is, when the first system service has actively declared starting of the silent running, but has not declared ending of the silent running, it may be determined that the status of the first system service is the working state.

In other words, the terminal device may determine, based on any one of the called status of the first system service, the occurrence status of the one or more events, or the status of the silent running of the first system service, whether the status of the first system service is the working state.

In a possible implementation, determining the status of the first system service based on the called status of the first system service, the occurrence status of the one or more events, and the status of the silent running includes: when the first system service is not called, occurrence of any one of the one or more events triggers ending of running of the first system service or no event in the one or more events occurs, and the first system service declares ending of the silent running or the first system service does not declare starting of the silent running, determining that the status of the first system service is the idle state.

When the called status is non-called (that is, the first system service is not called by any application process), occurrence of any one of the one or more events related to the first system service triggers ending of running of the first system service or no event in the one or more events occurs, and the status of the silent running is non-silent running, the terminal device may determine that the status of the first system service is the idle state.

In other words, the terminal device may determine, with reference to the three items: the called status of the first system service, the occurrence status of the one or more events, and the status of the silent running of the first system service, whether the status of the first system service is the idle state.

In a possible implementation, obtaining the called status of the first system service (step 410 of the method 400) includes: obtaining a called count of the first system service; and when the called count is zero, determining that the called status is non-called; or when the called count is greater than zero, determining that the called status is called.

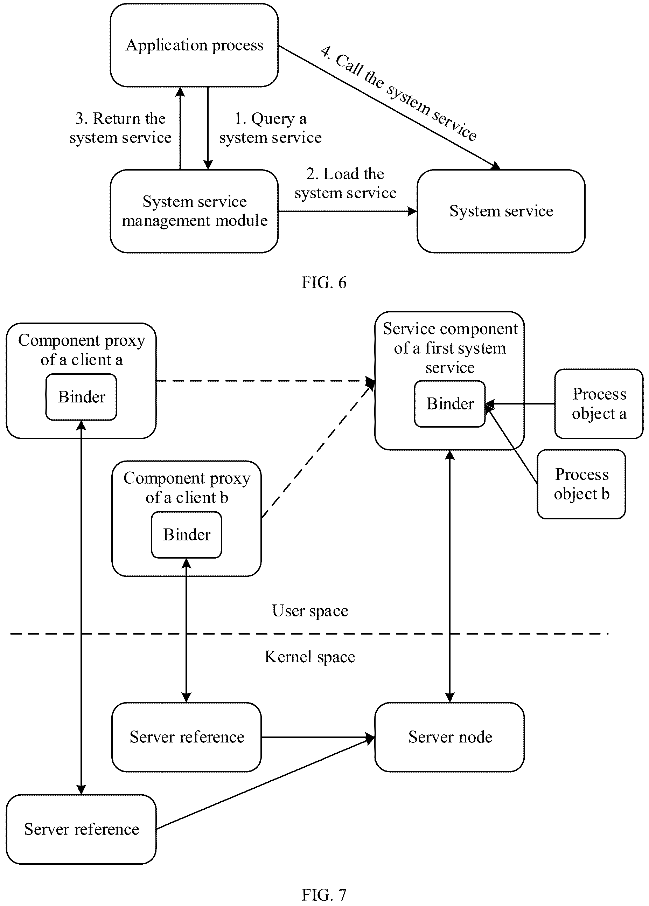

FIG. 6 is a diagram of calling a system service by an application process according to an embodiment of this application. For ease of better understanding of the system service management method provided in embodiments of this application, the following briefly describes a process in which an application calls a system service with reference to FIG. 6.

Step 1: An application process queries a system service.

As shown in FIG. 6, an application process of a system application and/or an application process of a third-party application may query a system service from a system service management module when the system service needs to be called.

Step 2: The system service management module loads the system service.

The system service management module may load the system service in response to query of the application process for the system service.

Step 3: The system service management module returns the system service.

When loading the corresponding system service, the system service management module may return the system service to the application process.

Step 4: The application process calls the system service.

The application process may call the corresponding system service based on the system service returned by the system service management module.

FIG. 7 is a diagram of obtaining a called count of a first system service according to an embodiment of this application.

Each service component corresponds to a server node, namely, a Binder entity object, in a Binder driver. As shown in FIG. 7, a service component of the first system service corresponds to one server node in a kernel space.

Each client component corresponds to a server reference, namely, a Binder reference object, in the Binder driver. As shown in FIG. 7, a component proxy of a client a corresponds to one server reference in the kernel space, and a component proxy of a client b corresponds to one server reference in the kernel space.

As shown in FIG. 7, in a user space, the component proxy of the client a calls the first system service by using a process object a. This is mapped into, in the kernel space, a reference relationship between a server reference corresponding to the component proxy of the client a in the kernel space and a server node corresponding to the service component of the first system service in the kernel space. Similarly, in the user space, the component proxy of the client b calls the first system service by using a process object b. This is mapped into, in the kernel space, a reference relationship between a server reference corresponding to the component proxy of the client b in the kernel space and a server node corresponding to the service component of the first system service in the kernel space.

The terminal device may utilize the system service management module, to obtain and collect statistics on a quantity of times of referring the server node corresponding to the service component of the first system service in the kernel space, namely, a quantity of server references associated with the server node. The quantity is a called count of the first system service. When the called count is zero, the terminal device may determine that a called status is non-called, that is, the first system service is not called; or when the called count is greater than zero, the terminal device may determine that a called status is called, that is, the first system service is called. As described above, when the first system service is called, the first system service is in a working state. However, when the first system service is not called, the first system service is not necessarily in an idle state.

In a possible implementation, obtaining the occurrence status of the event related to the first system service (step 420 of the method 400) includes: detecting the event related to the first system service.

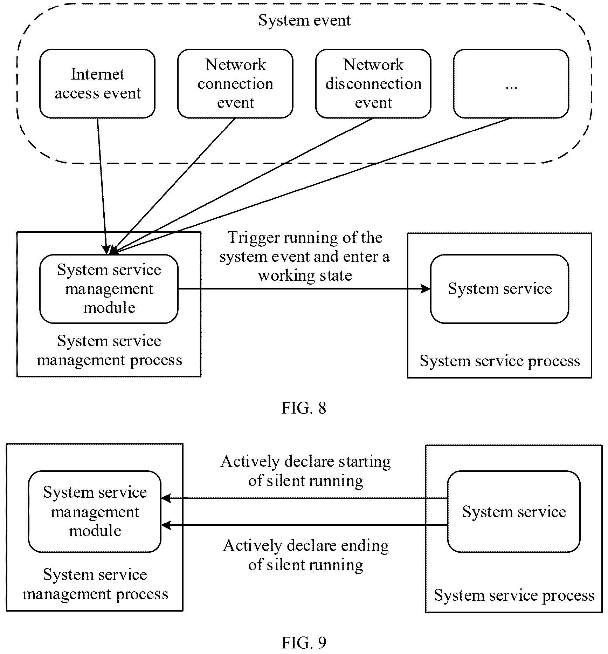

FIG. 8 is a diagram of detecting a system event according to an embodiment of this application.

As shown in FIG. 8, a terminal device may detect the system event (referred to as an event for short) by utilizing a system service management module. The system event may include but is not limited to an internet access event, a network connection event, a network disconnection event, and the like shown in the figure. When an event occurs, the system service management module of the terminal device may receive a notification message of occurrence of the event. Therefore, the system service management module may determine, based on a pre-configured and pre-stored configuration file of a first system service, whether the event is related to the first system service. When the event is related to the first system service, it is determined, based on the configuration file, whether occurrence of the event triggers running of the first system service or triggers ending of running of the first system service. When it is determined that occurrence of the event triggers running of the first system service, it may be determined that the status of the first system service is a working state. When it is determined that occurrence of the event triggers ending of running of the first system service, the first system service may not enter an idle state, and whether the first system service enters the idle state may be further determined in combination with another aspect. For example, in an example in which a network service is the first system service, a related event of the network service may include a network connection event. For example, it is configured in the configuration file that occurrence of the network connection event may trigger running of the network service. In this case, based on the configuration file, when the network connection event occurs, the terminal device may determine that the network service enters the working state.

FIG. 9 is a diagram of declaring, by a system service, starting of silent running and declaring ending of the silent running according to an embodiment of this application.

A premise of the step: obtaining the status of the silent running of the first system service (step 430 of the method 400) is that a system service management module may provide an interface for the system service to declare starting of the silent running and declare ending of the silent running. As shown in FIG. 9, when the system service needs to perform silent running, the system service may actively declare starting of the silent running through the interface. In this way, the system service management module knows a time at which the system service starts the silent running and enters a working state. When the system service expects to end the silent running, the system service may actively declare ending of the silent running through the interface. In this way, the system service management module knows a time at which the system service ends the silent running.

In a possible implementation, the method 400 further includes: updating a status identifier based on a most recently determined status of the first system service, where the status identifier is used to record a status of the first system service.

In other words, after the status of the first system service is most recently determined, the terminal device may record the status of the first system service by utilizing the system service management module.

In a possible implementation, updating the status identifier based on the most recently determined status of the first system service includes: when the status identifier is empty or the recorded status of the first system service is the working state, updating the status identifier to an idle state when it is most recently determined that a called status is non-called, no event in one or more events occurs or occurrence of any one of one or more events triggers ending of running of the first system service, and the status of the silent running is non-silent running.

In other words, after the terminal device is powered on and runs, when the status identifier is empty or it is determined and recorded that the status of the first system service is the working state, the system service management module continuously obtains the called status of the first system service, an occurrence status of the one or more events related to the first system service, and the status of the silent running of the first system service. When it is most recently determined that the called status is non-called, no event in the one or more events related to the first system service occurs or occurrence of any one of the one or more events triggers ending of running of the first system service, and the first system service never declares starting of the silent running or has declared ending of the silent running, the terminal device may update the status of the first system service to the idle state by utilizing the system service management module.

In a possible implementation, updating the status identifier based on the most recently determined status of the first system service includes: when the status identifier is empty or the recorded status of the first system service is the idle state, updating the status identifier to the working state when it is most recently determined that the called status is called, or when occurrence of any one of the one or more events triggers running of the first system service, or when the status of the silent running is silent running.

In other words, after the terminal device is powered on and runs, when the status identifier is empty or it is determined and recorded that the status of the first system service is the idle state, the system service management module continuously obtains the called status of the first system service, the occurrence status of the event related to the first system service, and the status of the silent running of the first system service. When it is most recently determined that the called status is called, the terminal device may update the status of the first system service to the working state by utilizing the system service management module; or when it is most recently determined that occurrence of any one of the events related to the first system service triggers running of the first system service, the terminal device may update the status of the first system service to the working state by utilizing the system service management module; or most recently, when the first system service has actively declared, to the system service management module, starting of the silent running, but has not declared ending of the silent running, the terminal device may update the status of the first system service to the working state by utilizing the system service management module.

In a possible implementation, the method 400 further includes: when the status of the first system service is the idle state, releasing a system resource occupied by the first system service.

When the first system service is in the idle state, the terminal device may release the system resource corresponding to the first system service, to avoid a waste of the system resource, so that another system service or application process can utilize the system resource.

Based on the foregoing solution, the terminal device obtains a called status of a non-basic system service, an occurrence status of an event related to the non-basic system service, and a status of silent running of the non-basic system service, to determine, with reference to the foregoing three items, that a status of the non-basic system service is, for example, a working state or an idle state, so as to accurately determine a status of each system service. In addition, the terminal device modifies the status of each system service in real time based on the foregoing three statuses. In addition, on a premise that the status of each system service can be learned in real time, the terminal device may manage, based on the status of the system service, a system resource corresponding to the system service. For example, when the first system service is in the idle state, the terminal device may release the system resource corresponding to the first system service, to avoid a waste of the system resource, so that another system service or application process can utilize the system resource.

An embodiment of this application further provides a terminal device. The terminal device includes a corresponding module configured to perform steps in any embodiment in FIG. 4 to FIG. 9. The modules included in the terminal device may be implemented in a software and/or hardware manner.

An embodiment of this application further provides a terminal device. The terminal device includes a memory and a processor. The memory is configured to store a program, and the processor is configured to: call and execute the program, so that the terminal device performs steps in any embodiment in FIG. 4 to FIG. 9.

This application further provides a chip system. The chip system includes at least one processor, configured to implement functions in steps in any embodiment in FIG. 4 to FIG. 9.

In a possible design, the chip system further includes a memory. The memory is configured to store program instructions and data. The memory is located inside the processor or outside the processor.

The chip system may include a chip, or may include a chip and another discrete component.

Embodiments of this application further provide a readable storage medium. The readable storage medium stores a program. When the program is executed by a terminal device, the terminal device is enabled to perform steps in any embodiment in FIG. 4 to FIG. 9.

Embodiments of this application further provide a program product. The program product includes a program. When the program is run by a terminal device, the terminal device is enabled to perform steps in any embodiment in FIG. 4 to FIG. 9.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be further understood that the memory in embodiments of this application may be a volatile memory or a nonvolatile memory, or may include a volatile memory and a nonvolatile memory.

Terms such as "unit" and "module" used in this specification may indicate device-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatus, device, and method may be implemented in other manners. For example, the described apparatus embodiments are merely examples. For example, division of the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on actual requirements to achieve the objectives of the solutions of embodiments.

In addition, functional modules in embodiments of this application may be integrated into one processing module, or each of the modules may exist alone physically, or two or more units are integrated into one module.

When the functions are implemented in a form of software functional unit and sold or used as an independent product, the functions may be stored in a readable storage medium. Based on such an understanding, the technical solutions of this application essentially, or the part contributing to the conventional technology, or a part of the technical solutions may be implemented in a form of software product. The software product is stored in a storage medium and includes several instructions for instructing a device to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system service management method, comprising:
obtaining a called status of a first system service, wherein the first system service is a system service other than a preset basic system service;
obtaining an occurrence status of one or more events related to the first system service, wherein the one or more events are configured in a configuration file corresponding to the first system service;
obtaining a status of silent running of the first system service; and
determining a status of the first system service based on the called status, the occurrence status of the one or more events, and the status of the silent running, wherein the status comprises a working state or an idle state.

2. The method according to claim 1, wherein determining the status of the first system service based on the called status, the occurrence status of the one or more events, and the status of the silent running comprises:
when the first system service is called, or when occurrence of any one of the one or more events triggers running of the first system service, or when the status of the silent running is silent running, determining that the status of the first system service is the working state.

3. The method according to claim 1, wherein determining the status of the first system service based on the called status, the occurrence status of the one or more events, and the status of the silent running comprises:
when the first system service is not called, occurrence of any one of the one or more events triggers ending of running of the first system service or no event in the one or more events occurs, and the status of the silent running is non-silent running, determining that the status of the first system service is the idle state.

4. The method according to any one of claims 1 to 3, wherein obtaining the called status of the first system service comprises:
obtaining a called count of the first system service; and
when the called count is zero, determining that the called status is non-called; or
when the called count is greater than zero, determining that the called status is called.

5. The method according to any one of claims 1 to 4, wherein obtaining the occurrence status of the one or more events related to the first system service comprises:
detecting the one or more events related to the first system service.

6. The method according to any one of claims 1 to 5, wherein the method further comprises:
updating a status identifier based on a most recently determined status of the first system service, wherein the status identifier is used to record the status of the first system service.

7. The method according to any one of claims 1 to 6, wherein the method further comprises:
when the status of the first system service is the idle state, releasing a system resource occupied by the first system service.

8. The method according to any one of claims 1 to 7, wherein the status of the silent running comprises silent running or non-silent running; and
when the first system service has declared starting of the silent running, but has not declared ending of the silent running, the status of the silent running is silent running; or
when the first system service has declared ending of the silent running, or never declares starting of the silent running, the status of the silent running is non-silent running.

9. A terminal device, comprising a processor and a memory, wherein
the memory is configured to store a program; and
the processor is configured to call the program, to enable the terminal device to perform the method according to any one of claims 1 to 8.

10. A readable storage medium, wherein the readable storage medium stores a program, and when the program is executed, a terminal device is enabled to perform the method according to any one of claims 1 to 8.

11. A program product, comprising a program, wherein when the program is run, a terminal device is enabled to perform the method according to any one of claims 1 to 8.
